# EUROPÄISCHE PATENTSCHRIFT

(11) **EP 3 457 244 B1**
(45) Veröffentlichungstag und Bekanntmachung des Hinweises auf die Patenterteilung: **30.10.2019**
(21) Anmeldenummer: 17191122.5
(22) Anmeldetag: 14.09.2017
(51) Int. Cl.: G05D 1/02, G06K 9/00, G05D 1/00

(54) **AUTONOMES FAHRZEUG UND MARKIERUNGSANORDNUNG FÜR EIN AUTONOMES FAHRZEUG**
AUTONOMOUS VEHICLE AND GROUND MARKING SET UP FOR AUTONOMOUS VEHICLE
VÉHICULE AUTONOME ET MARQUAGE AU SOL POUR UN VÉHICULE AUTONOME

(43) Veröffentlichungstag der Anmeldung: 20.03.2019
(73) Patentinhaber: SICK AG, 79183 Waldkirch/Breisgau (DE)
(72) Erfinder: STEDER, Bastian, 79280 Au (DE); FISCHER, Fabian, 79183 Waldkirch (DE); BLUDAU, Thomas, 79211 Denzlingen (DE)
(74) Vertreter: Manitz Finsterwald Patent- und Rechtsanwaltspartnerschaft mbB

(56) Entgegenhaltungen:
- US-A- 5 814 961
- US-A1- 2017 168 496
- Roboteq: "Building a Magnetic Track guided AGV- AN1326", , 26. November 2013 (2013-11-26), Seiten 1-13, XP055451739, Zurich Gefunden im Internet: URL:https://www.roboteq.com/index.php/docm an/magsensor-documents-and-files/mgs-docum ents-1/mgs-appnotes-1/177-an1326-building- a-magnetic-track-guided-agv/file [gefunden am 2018-02-15]
- BECCARI G ET AL: "Vision-based line tracking and navigation in structured environments", COMPUTATIONAL INTELLIGENCE IN ROBOTICS AND AUTOMATION, 1997. CIRA'97., PROCEEDINGS., 1997 IEEE INTERNATIONAL SYMPOSIUM ON MONTEREY, CA, USA 10-11 JULY 1997, LOS ALAMITOS, CA, USA,IEEE COMPUT. SOC, US, 10. Juli 1997 (1997-07-10), Seiten 406-411, XP010239728, DOI: 10.1109/CIRA.1997.613888 ISBN: 978-0-8186-8138-7

## Beschreibung

Die vorliegende Erfindung betrifft ein autonomes Fahrzeug mit einer Steuereinrichtung und einem Sensor zur Erfassung einer zentralen fortlaufenden Fahrspurmarkierung, wobei die Steuereinrichtung dazu angepasst ist, das Fahrzeug in Abhängigkeit von der erfassten Fahrspurmarkierung entlang der Fahrspurmarkierung zu steuern. Derartige autonome Fahrzeuge sind grundsätzlich bekannt und werden insbesondere als fahrerlose Transportfahrzeuge im industriellen Kontext eingesetzt, z.B. in Lager- und Produktionshallen.

Der Sensor, der auch als Fahrspur- bzw. Spursensor bezeichnet werden kann, und die Fahrspurmarkierung sind technologisch aufeinander abgestimmt. So kann der Sensor z.B. ein optischer Sensor sein, der eine kontraststarke Fahrspurmarkierung auf optischem Wege detektiert, sodass das Fahrzeug auf dieser Grundlage entlang der Fahrspurmarkierung gesteuert werden kann, d.h. das Fahrzeug folgt der Fahrspurmarkierung völlig automatisch. Die Fahrspurmarkierung kann hierfür z.B. als eine durchgezogene oder gestrichelte Linie ausgebildet sein, die entlang einer gewünschten Fahrspur auf den Boden aufgeklebt ist. Alternativ zu einem optischen System kann der Sensor ein elektromagnetischer Sensor sein, der eine elektromagnetische oder magnetische Fahrspurmarkierung erfasst. Denkbar sind auch mehrere hintereinander angeordnete Induktionsschleifen, die gemeinsam eine Fahrspurmarkierung bilden. Die Induktionsschleifen können in den Boden eingebracht sein und von dem Sensor berührungslos detektiert bzw. erfasst werden.

Zusätzlich zu der Fahrspurmarkierung, die eine gewünschte Fahrspur markiert, ist es häufig notwendig, dem Fahrzeug entlang der Fahrspur weitere Informationen zur Verfügung zu stellen. Diese Informationen können beispielsweise Steuerungsinformationen sein, um das Fahrzeug auf eine gewünschte Weise steuern zu können. Beispielhafte Steuerungsinformationen können zum Beispiel Positionsinformationen sein, sodass das Fahrzeug seine relative oder globale Position bestimmen kann. Ferner kann das Fahrzeug durch die weiteren Informationen darüber informiert werden, dass im weiteren Verlauf der Fahrspur eine Kurve bevorsteht und das normale Tempo deswegen gedrosselt werden soll. Ferner kann es im Falle mehrerer möglicher Fahrspuren notwendig sein, das Fahrzeug darüber zu informieren, welcher der mehreren möglichen Fahrspuren im Weiteren gefolgt werden soll. Mit anderen Worten können die weiteren Informationen Eigenschaften der Fahrspur oder Kursinformationen für das Fahrzeug umfassen. Denkbar sind auch weitere Informationen, die für die Steuerung des Fahrzeugs in einem spezifischen Anwendungsfall relevant sein können.

Um dem Fahrzeug entlang der Fahrspur bestimmte Informationen zur Verfügung zu stellen, ist es bekannt, benachbart zu der Fahrspurmarkierung weitere Markierungen vorzusehen, die von dem Fahrzeug erfasst und interpretiert werden. Solche Markierungen können zum Beispiel in Form von magnetischen Streifen bereitgestellt werden. Hierbei ist es notwendig, in Abhängigkeit von der Komplexität der Informationen und der Auflösung des verwendeten Sensors mehrere Markierungen anzubringen, die z.B. parallel zur Fahrspurmarkierung hintereinander angeordnet sind. Dieser Umstand bringt es mit sich, dass das Fahrzeug zur vollständigen Erfassung der durch die Markierungen repräsentierten Information eine entsprechende Fahrstrecke zurücklegen muss, d.h. die abschnittsweise erfassten Markierungen müssen aus der Sicht des Fahrzeugs über die Zeit akkumuliert werden. Dies kann jedoch insbesondere dann zu Problemen führen, wenn das Fahrzeug aus unvorhersehbaren Gründen während der Erfassung der Markierungen gestoppt werden muss und hierdurch die Information lediglich teilweise erfasst werden kann. Aus diesem Grund muss das Fahrzeug mit einer Intelligenz ausgestattet sein, sodass ein "häppchenweises" Einlesen von Informationen störungsfrei möglich ist. Es hat sich jedoch gezeigt, dass diese Anforderung nur mit hohem Aufwand und selbst dann nur unzufriedenstellend erfüllt werden kann, da eine dynamische bzw. flexible Steuerung des Fahrzeugs letztlich behindert wird.

Es hat sich ferner herausgestellt, dass im Zuge der Entwicklung immer komplexerer autonomer Fahrsysteme eine immer größere Anzahl von verschiedenen Informationen entlang der Fahrspur zur Verfügung gestellt werden müssen. Die hierfür notwendige Anzahl von Markierungen erfordert - zusätzlich zu der Fahrspurmarkierung - einen hohen Platzbedarf. Die Markierungen können in Abhängigkeit der verwendeten Sensoren nicht beliebig eng zueinander angeordnet werden, da die Markierungen sonst nicht mehr voneinander unterschieden werden können. Mit einer hohen Anzahl von Markierungen steigen auch die Anforderungen an die entsprechenden Sensoren, die zur Erfassung der Markierungen an dem Fahrzeug vorgesehen werden müssen.

US 5,814,961 A offenbart ein autonomes Fahrzeug mit den Merkmalen des Oberbegriffs von Anspruch 1. Weiterer technologischer Hintergrund ist in US 2017/168496 A1 sowie in den Dokumenten "Roboteq: Building a Magnetic Track guided AGV - AN1326, 26. November 2013" und in "Beccari et al: Vision-based line tracking and navigation in structured environments, Proceedings of IEEE International Symposium on Computational Intelligence in Robotics and Automation, 1997" beschrieben.

Es ist eine Aufgabe der Erfindung, ein autonomes Fahrzeug zur Verfügung zu stellen, dass in der Lage ist, auf der Grundlage von zusätzlich zur Fahrspurmarkierung vorgesehenen Markierungen komplexe Informationen in kurzer Zeit zuverlässig zu erfassen und zu verarbeiten, wobei das Fahrzeug eine geringe Komplexität aufweisen soll.

Weiterhin ist es eine Aufgabe der Erfindung eine Markierungsanordnung für ein autonomes Fahrzeug zur Verfügung zu stellen, dass den oben genannten Anforderungen an das autonome Fahrzeug Rechnung trägt.

Die Aufgabe wird gelöst durch ein autonomes Fahrzeug gemäß Anspruch 1 und eine Markierungsanordnung gemäß Anspruch 13.

Die Erfindung bezieht sich allgemein auf ein autonomes Fahrzeug mit einer Steuereinrichtung und einem Sensor zur Erfassung einer fortlaufenden Fahrspurmarkierung, wobei die Steuereinrichtung dazu angepasst ist, das Fahrzeug in Abhängigkeit von der erfassten Fahrspurmarkierung entlang der Fahrspurmarkierung zu steuern. Der Sensor ist hierbei dazu angepasst, eine benachbart zu der Fahrspurmarkierung angeordnete Kodiermarkierung zu erfassen und einen Abstand zwischen der erfassten Kodiermarkierung und der Fahrspurmarkierung zu ermitteln, wobei die Steuereinrichtung ferner dazu angepasst ist, das Fahrzeug in Abhängigkeit von dem ermittelten Abstand zu steuern.

Gemäß einer Ausführungsform ist der Sensor des autonomen Fahrzeugs gemäß dazu angepasst, eine benachbart zu der Fahrspurmarkierung angeordnete erste Kodiermarkierung zu erfassen sowie einen ersten Abstand zwischen der erfassten ersten Kodiermarkierung und der Fahrspurmarkierung zu ermitteln. Ferner ist der Sensor dazu angepasst, eine benachbart zu der Fahrspurmarkierung angeordnete zweite Kodiermarkierung zu erfassen, die der ersten Kodiermarkierung quer zur Fahrspurmarkierung gegenüberliegt, also auf der anderen Seite der Fahrspurmarkierung. Analog zur ersten Kodiermarkierung ist der Sensor dazu angepasst, einen zweiten Abstand zwischen der erfassten zweiten Kodiermarkierung und der Fahrspurmarkierung zu ermitteln. Die Steuereinrichtung ist dazu angepasst, das Fahrzeug in Abhängigkeit von dem ermittelten ersten Abstand und dem ermittelten zweiten Abstand zu steuern.

Es wird die jeweilige Position der ersten und zweiten Kodiermarkierung relativ zu der Fahrspurmarkierung ausgenutzt, um die Steuerung des Fahrzeugs - über die Fahrspursteuerung hinaus - zu beeinflussen. Mit anderen Worten ist im Grunde nicht die Kodiermarkierung selbst Träger der Information, sondern der Abstand der Kodiermarkierung relativ zu der Fahrspurmarkierung. Auf diese Weise "kodiert" eine Kodiermarkierung eine bestimmte Information für das Fahrzeug, die von dem Fahrzeug "dekodiert" werden kann, um die Information z.B. in einen Steuerungsbefehl umzusetzen. Der Abstand zu der Fahrspurmarkierung kann derart variiert werden, dass ein bestimmter Abstandswert eine bestimmte Information, insbesondere einen Steuerungsbefehl für das Fahrzeug repräsentiert. Somit kann dem Fahrzeug im Grunde bereits durch eine einzelne Kodiermarkierung eine spezifische Information aus einer gegebenenfalls großen Menge von Informationen mitgeteilt werden, ohne dass hierfür mehrere Markierungen erforderlich sind.

Vorteilhafterweise werden zwei gegenüberliegende Kodiermarkierungen erfasst, die gemeinsam ein Kodiermarkierungspaar bilden können. Dies erlaubt eine besonders zuverlässige Erfassung von Informationen, die gegenüber dem Fall von nur einer Kodiermarkierung noch komplexer sein können. Dies wird weiter unten noch genauer erläutert.

Ein weiterer Vorteil der Erfindung liegt darin, dass der Sensor zur Erfassung der Fahrspurmarkierung bereits häufig von Haus aus zur Erfassung von Abständen geeignet ist. Beispielsweise kann zur Steuerung des Fahrzeugs entlang der Fahrspurmarkierung der Abstand zwischen der Fahrspurmarkierung und einer internen Referenz ermittelt werden, um diesen Abstand im Wege einer adaptiven Regelung auf einem vorbestimmten Sollwert zu halten. Dies bedeutet, dass das Fahrzeug in vielen Fällen bereits die nötige Sensortechnologie aufweist, um einfach die Ermittlung des Abstands zwischen der Fahrspurmarkierung und einer jeweiligen Kodiermarkierung zu ermöglichen. Die Komplexität des Fahrzeugs kann hierdurch gering gehalten werden, da keine zusätzliche Hardware in Form zusätzlicher Sensoren vorgesehen muss. Zusätzliche Sensoren können gleichwohl in manchen Anwendungsfällen sinnvoll oder notwendig sein, insbesondere wenn ein elektromagnetisches und ein optisches Erfassungssystem kombiniert in einem Fahrzeug verwirklicht sein sollen.

Allgemein ist der Sensor oder die Steuereinrichtung dazu angepasst, eine Kodiermarkierung zu detektieren bzw. von anderen Markierungen, insbesondere von der Fahrspurmarkierung, zu unterscheiden. Ebenso sollen der Sensor oder die Steuereinrichtung dazu angepasst sein, die Fahrspurmarkierung von anderen Markierungen, insbesondere von Kodiermarkierungen zu unterschieden, um eine zuverlässige Steuerung des Fahrzeugs zu gewährleisten.

Bevorzugt "erwartet" der Sensor des Fahrzeugs, dass die zweite Kodiermarkierung der ersten Kodiermarkierung quer zur Fahrspurmarkierung gegenüberliegt, d.h. auf beiden Seiten der Fahrspurmarkierung befindet sich jeweils eine Kodiermarkierung. Anders ausgedrückt können die Kodiermarkierungen bezüglich der Fahrspurmarkierung diametral gegenüberliegend angeordnet sein. Die Fahrspurmarkierung erstreckt sich somit im Wesentlichen zentral zwischen der ersten und zweiten Kodiermarkierung. Auf diese Weise sind die Kodiermarkierungen im unmittelbaren räumlichen Umfeld zu der Fahrspurmarkierung und zueinander angeordnet, was im Hinblick auf eine zuverlässige Erfassung der relevanten Markierungen besonders vorteilhaft ist. Die Kodiermarkierungen können hierbei so angeordnet sein, dass sie von den im Stand der Technik bekannten Sensoren zur Erfassung der Fahrspurmarkierung bequem miterfasst werden können. Auf teure "Weitwinkel"-Sensoren oder zusätzliche Sensoren kann somit verzichtet werden. Die Anordnung quer zur Fahrspurmarkierung besitzt auch den Vorteil, dass die Abstände zwischen den Kodiermarkierungen und der Fahrspurmarkierung zumindest im Wesentlichen zeitgleich erfasst werden können und hierdurch eine schnelle und zuverlässige Erfassung der Information möglich ist. Vorzugsweise sind die Kodiermarkierungen auf einer imaginären Geraden angeordnet, die sich im Wesentlichen senkrecht zur Fahrspurmarkierung erstreckt. Dies muss aber nicht so sein. So können die Kodiermarkierungen entlang der Fahrspurmarkierung auch leicht versetzt angeordnet sein, was zumindest dann keinen Nachteil mit sich bringt, wenn beide Kodiermarkierungen gleichzeitig oder zumindest sehr kurz hintereinander erfasst werden können. Im Hinblick auf die schnelle Erfassbarkeit wird eine für das Fahrzeug verwertbare Information bzw. Informationseinheit vorzugsweise mit maximal zwei Kodiermarkierungen kodiert, wobei sich auf jeder Seite der Fahrspurmarkierung maximal eine Kodiermarkierung befindet.

Es versteht sich, dass Merkmale, die im Zusammenhang mit der Ausführungsform mit zwei Kodiermarkierungen beschrieben sind, in entsprechender Weise auch in einem Fahrzeug verwirklicht sein können, das abgesehen von der Fahrspurmarkierung in Abhängigkeit lediglich eines gemessenen Abstands zu einer Kodiermarkierung gesteuert wird. Ferner versteht es sich, dass wenngleich die Erfindung gemäß der vorstehenden Schilderung überwiegend von zwei gemessenen Abständen zwischen einer jeweiligen Kodiermarkierung und der Fahrspurmarkierung ausgeht, ist es gemäß dem allgemeinen Aspekt denkbar, dem Fahrzeug Informationen auf der Basis lediglich einer Abstandsmessung zur Verfügung zu stellen.

Weitere vorteilhafte Ausführungsformen der Erfindung sind in der nachfolgenden Beschreibung, den Ansprüchen und in den Figuren beschrieben.

Gemäß einer bevorzugten Ausführungsform ist die Steuereinrichtung ferner dazu angepasst, aus dem ersten Abstand und/oder dem zweiten Abstand einen Wert zu ermitteln, der einen eindeutigen Steuerungsbefehl für das Fahrzeug repräsentiert. Die Kombination von zwei Abständen erlaubt es, eine große Anzahl von verschiedenen Werten bzw. Steuerungsbefehlen, die auch implizit in Form einer Angabe über die Eigenschaft eines an die Kodiermarkierungen angrenzenden Abschnitts der Fahrspurmarkierung vorliegen können, zu kodieren. Bei dem Wert kann es sich insbesondere um einen Zahlenwert handeln, der aus den beiden ermittelten Abstandswerten berechnet werden kann. Jede Kombination von zwei Abstandswerten kann hierbei einem eindeutigen Steuerungsbefehl entsprechen. Eine Zuordnung zwischen einem berechneten Wert und einem Steuerungsbefehl kann durch eine in dem Fahrzeug gespeicherte Zuordnungstabelle erfolgen. Alternativ zu einer Berechnung des Werts aus den beiden Abständen kann auch ein Lookup-Tabelle gespeichert sein, in der für jede zu erwartende Kombination von Abständen der zugehörige Wert, der einen Steuerungsbefehl repräsentiert, gespeichert ist. Auf diese Weise kann die Verarbeitung der Abstände beschleunigt sowie besonders zuverlässig gestaltet werden. Die Ermittlung des Steuerungsbefehls kann auch in dem Sensor erfolgen.

Gemäß einer weiteren bevorzugten Ausführungsform ist der Sensor ferner dazu angepasst, den ersten Abstand und/oder den zweiten Abstand als Vielfaches einer vorbestimmten, insbesondere diskreten, Schrittweite zu ermitteln. Unter einer "diskreten Schrittweite" ist in diesem Zusammenhang eine feste Schrittweite zu verstehen, die abzählbar und für eine gesamte Fahrspur einheitlich definiert ist. Die Auflösung des Sensors kann an die diskrete Schrittweite dahingehend angepasst sein, dass der Sensor den Abstand in der Einheit "Schrittweiten" ermittelt. Hierfür kann die Auflösungsgenauigkeit ("Auflösungsschrittweite") des Sensors vorzugsweise eine halbe vorbestimmte Schrittweite oder weniger betragen, sodass der Abstand in der der Einheit "Schrittweiten" zuverlässig und präzise ermittelt werden kann (z.B. wenn die für den Abstand maßgebliche Kante im Bereich eines Übergangs zwischen zwei Sensorpixeln liegt). Anders ausgedrückt ist die vorbestimmte Schrittweite, durch die ein Abstandsraster einer Kodiermarkeriung von der Fahrspurmarkierung definiert werden kann, vorzugsweise mindestens doppelt so groß wie der Abstand, der von dem Sensors gemessen, d.h. aufgelöst werden kann. Die vorbestimmte Schrittweite kann im Sinne einer noch genaueren bzw. robusteren Messung auch das Dreifache der Sensorauflösung betragen oder noch größer gewählt sein. Umgekehrt kann bei konstanter vorbestimmter Schrittweite auch die Sensorauflösung erhöht werden, um den Abstand in Schrittweiten auch unter ungünstigen Bedindungen (z.B. im Falle ungenau angebrachter Kodiermarkierungen) zuverlässig ermitteln zu können. Vorzugsweise ermittelt der Sensor den Abstand als ganzzahliges Vielfaches der Schrittweite. Hierbei kann der Sensor dazu angepasst sein, einen gemessenen Abstand auf das nächstliegende Vielfache der (diskreten) Schrittweite zu runden. Der Sensor kann vorteilhaft als diskreter Sensor ausgebildet sein.

Die vorbestimmte Schrittweite kann so groß dimensioniert sein, dass eine jeweilige Kodiermarkierung, die in einem Abstand von einer Schrittweite von der Fahrspurmarkierung entfernt angeordnet ist, von dem Sensor gerade noch zuverlässig von der Fahrspurmarkierung unterschieden werden kann. Mit anderen Worten können die tatsächliche oder rechnerische Auflösung des Sensors und die vorbestimmte Schrittweite aneinander angepasst sein. Ferner kann die vorbestimmte Schrittweite so klein dimensioniert sein, dass der von dem Sensor erfassbare Abstand zwischen einer Kodiermarkierung und der Fahrspurmarkierung wenigstens zwei, bevorzugt wenigstens drei Schrittweiten, besonders bevorzugt wenigstens vier Schrittweiten beträgt.

Nach einer weiteren bevorzugten Ausführungsform ist die Steuereinrichtung ferner dazu angepasst, festzustellen, ob der erste Abstand und/oder der zweite Abstand zumindest im Wesentlichen gleich einem ganzzahligen Vielfachen einer vorbestimmten diskreten Schrittweite sind, und ein Fehlersignal zu erzeugen, wenn der erste Abstand und/oder der zweite Abstand nicht zumindest im Wesentlichen gleich einem Vielfachen der vorbestimmten diskreten Schrittweite sind. Hierbei wird unterstellt, dass eine valide Kodiermarkierung stets in einem Abstand von Vielfachen der Schrittweite von der Fahrspurmarkierung entfernt angeordnet ist. Auf diese Weise kann der Sensor also überprüfen, ob es sich bei einem gemessenen Abstand tatsächlich um einen Abstand zwischen einer Kodiermarkierung und der Fahrspurmarkierung handelt, der für die Steuerung des Fahrzeugs herangezogen werden soll. Wenn der gemessenen Abstand nicht gleich einem Vielfachen der vorbestimmten diskreten Schrittweite ist, handelt es sich - unter der genannten Annahme, dass valide Kodiermarkierungen stets Vielfache der Schrittweite von der Fahrspurmarkierung beabstandet sind - nicht um eine valide Messung. Der ermittelte Abstand, der unter der genannten Annahme nicht auf einer Kodiermarkierung sondern auf einem anderen Objekt basiert, kann z.B. verworfen werden oder es können sonstige geeignete Maßnahmen getroffen werden (z.B. Nothalt des Fahrzeugs). Vorzugsweise werden beide Abstände überprüft. Auf diese Weise kann ein jeweiliges Paar von Kodiermarkierungen validiert werden, wodurch eine fehlerhafte Erfassung von Informationen noch besser ausgeschlossen werden kann.

Nach einer weiteren Ausführungsform ist die Steuereinrichtung ferner dazu angepasst, aus dem ersten Abstand und/oder dem zweiten Abstand eine Fahrtrichtung des Fahrzeugs zu ermitteln. Beispielsweise kann die erste Kodiermarkierung, welche aus Sicht des Fahrzeugs in einer Vorwärtsrichtung stets links von der Fahrspurmarkierung angeordnet ist, stets weiter von der Fahrspurmarkierung beabstandet sein als die zweite, stets rechts von der Fahrspurmarkierung angeordnete zweite Kodiermarkierung. Denkbar ist auch, die Fahrtrichtung nur anhand eines Abstands zu unterscheiden, nämlich wenn eine der Fahrtrichtung zugeordnete Kodiermarkierung in einem vorbestimmten eindeutigen Abstand und stets auf einer bestimmten Seite von der Fahrspurmarkierung (z.B. in Fahrtrichtung rechts) positioniert wird. Hieraus kann die Steuereinrichtung die Fahrtrichtung ermitteln.

Vorzugsweise ist der Sensor ferner dazu angepasst, die erste Kodiermarkierung und die zweite Kodiermarkierung paarweise zu erfassen, wobei ein Fehlersignal erzeugt wird, wenn die erste Kodiermarkierung und die zweite Kodiermarkierung nicht paarweise erfasst werden. In diesem Zusammenhang heißt "paarweise", dass die erste und zweite Kodiermarkierung zumindest im Wesentlichen zeitgleich erfasst werden müssen. Andernfalls liegt kein valides Kodiermarkierungspaar vor, das für die Steuerung des Fahrzeugs berücksichtigt werden soll. Im Falle eines erzeugten Fehlersignals kann die Messung verworfen oder eine sonstige geeignete Maßnahme getroffen werden, etwa ein Ausgeben des Fehlersignals an eine übergeordnete Steuerung des Fahrzeugs oder das Setzen eines Fehlerflags. Die paarweise Erfassung gewährleistet auch eine zeiteffiziente Erfassung der durch die Kodiermarkierungen kodierten Information. Die vorzugsweise ebenfalls paarweise ermittelten Abstände liegen im Wesentlichen zeitgleich vor, sodass die Information sogleich dekodiert werden kann. Im Einklang mit dieser Vorgehensweise kann ein Fehlersignal insbesondere auch dann erzeugt werden, wenn der erste oder zweite Abstand separat, d.h. nicht im Wesentlichen zeitgleich erfasst werden.

Nach einer weiteren Ausführungsform ist die Steuereinrichtung ferner dazu angepasst, festzustellen, ob der erste Abstand und/oder zweite Abstand wenigstens einen Abstandsgrenzwert verletzen, und ein dem wenigstens einen Abstandsgrenzwert zugeordnetes Fehlersignal zu erzeugen, wenn der wenigstens eine Abstandsgrenzwert verletzt wird. Auf diese Weise kann überprüft werden, ob einzelne Abstandsmessungen auf validen Kodiermarkierungen beruhen bzw. ob beide Abstandsmessungen auf einem validen Kodiermarkierungspaar beruhen. Hierfür können sowohl ein oberer als auch ein unterer Abstandsgrenzwert definiert werden. Beispielsweise kann ein unterer Abstandsgrenzwert definiert werden, der größer Null ist. Der untere Abstandsgrenzwert kann insbesondere eine vorbestimmte Schrittweite betragen, d.h. der gemessene Abstand muss mindestens eine Schrittweite betragen. Andernfalls wird vorzugsweise ein Fehlersignal erzeugt.

Die Steuereinrichtung kann ferner dazu angepasst sein, festzustellen, ob eine absolute Differenz des ersten Abstands und des zweiten Abstands und/oder ein Verhältnis zwischen dem ersten Abstand und dem zweiten Abstand einen Validierungsgrenzwert verletzen, und ein Fehlersignal zu erzeugen, wenn der Validierungsgrenzwert verletzt wird. Hierbei kann auf einzelne Abstandsgrenzwerte verzichtet werden und stattdessen einer Validierung des Kodiermarkierungspaars auf der Grundlage der Differenz bzw. dem Verhältnis zwischen den beiden Abständen erfolgen, die lediglich einen einzelnen Vergleich mit einem Grenzwert erfordert. Sofern z.B. für die oben genannte Unterscheidbarkeit der Fahrtrichtung der erste Abstand stets größer sein sollte als der zweite Abstand, so kann diese Information zur Validierung eines Kodiermarkierungspaars ausgenutzt werden. Wenn also von dem Sensor festgestellt wird, dass die beiden Abstände identisch sind (Differenz gleich Null, Verhältnis gleich eins), so liegt ein Fehler vor.

Vorzugsweise weist das Fahrzeug lediglich einen einzigen Sensor zur Erfassung der Fahrspurmarkierung, der ersten Kodiermarkierung und der zweiten Kodiermarkierung auf. Die Komplexität des Fahrzeugs im Hinblick auf Hard- und Software kann hierdurch besonders gering sein. Insbesondere kann die Verarbeitung von mehreren unterschiedlichen Sensorsignalen vermieden werden.

Nach einer weiteren Ausführungsform ist der Sensor dazu angepasst, zur Erfassung der Fahrspurmarkierung wenigstens einen Abstand zwischen der Fahrspurmarkierung und dem Fahrzeug zu ermitteln, insbesondere wobei der Sensor als Abstandssensor ausgebildet ist. Der Abstandssensor kann insbesondere ausschließlich dazu ausgebildet sein, Abstände zu messen. Denkbar ist aber auch ein Bildsensor, der aus gemessenen Bilddaten Abstände zwischen detektierten Markierungen berechnet. Zur Erfassung einer Kodiermarkierung kann es ausreichend sein, lediglich den Abstand zwischen der mutmaßlichen Kodiermarkierung und dem Fahrzeug zu ermitteln. Auf der Grundlage dieser Abstandsmessung und einem gemessenen Abstand zwischen der Fahrspurmarkierung und dem Fahrzeug kann dann der Abstand zwischen der Kodiermarkierung und der Fahrspurmarkierung durch Trigonometrie ermittelt werden. Der so ermittelte Abstand kann dann durch eine oder mehrere der oben erläuterten Validierungsschritte ausgewertet werden, um festzustellen, ob der gemessene Abstand tatsächlich auf einer Kodiermarkierung beruht. Alternativ kann der ermittelte Abstand auch direkt verarbeitet werden. Dies kommt insbesondere dann in Betracht, wenn bereits anderweitig festgestellt worden ist, dass der gemessene Abstand auf einer Kodiermarkierung beruht. Beispielsweise kann jede Kodiermarkierung mit einer Signalfarbe versehen sein, die durch den Sensor oder anderweitig detektiert wird.

Der Sensor kann einen optoelektronischen Sensor und/oder einen elektromagnetischen Sensor umfassen, welcher insbesondere einen induktiven Sensor, einen Magnetfeldsensor oder einen kapazitiven Sensor aufweisen kann. Es versteht sich, dass die Kodiermarkierungen in Abhängigkeit von dem Sensortyp als optisch und/oder elektromagnetisch erfassbare Markierungen ausgebildet sein können.

Die oben beschriebenen Merkmale des Sensors können auch im Zusammenspiel mit der Steuereinrichtung verwirklicht sein. Insbesondere kann der Sensor als reines Messorgan fungieren, wobei die Steuereinrichtung die Verarbeitung der Sensorsignale übernimmt. Umgekehrt kann der Sensor Signalverarbeitungsschritte ganz oder teilweise übernehmen.

Die Erfindung bezieht sich ferner auf eine Markierungsanordnung für ein autonomes Fahrzeug, insbesondere ein fahrerloses Transportfahrzeug nach einer der vorstehend beschriebenen Ausführungsformen. Die Markierungsanordnung umfasst eine zentrale fortlaufende Fahrspurmarkierung, wenigstens eine benachbart zu der Fahrspurmarkierung und in einem ersten Abstand zu der Fahrspurmarkierung angeordnete erste Kodiermarkierung sowie wenigstens eine benachbart zu der Fahrspurmarkierung und in einem zweiten Abstand zu der Fahrspurmarkierung angeordnete zweite Kodiermarkierung, die der ersten Kodiermarkierung quer zur Fahrspurmarkierung gegenüberliegt. Die erste Kodiermarkierung und die zweite Kodiermarkierung bilden hierbei ein Kodiermarkierungspaar, das aufgrund des ersten und zweiten Abstands einen eindeutigen Steuerungsbefehl für das Fahrzeug repräsentiert.

Vorzugsweise ist der erste Abstand stets größer als der zweite Abstand, um auf diese Weise z.B. eine Fahrtrichtung für das Fahrzeug zu definieren. Zusätzlich oder alternativ kann vorgesehen sein, dass der erste Abstand und der zweite Abstand jeweils gleich einem Vielfachen einer vorbestimmten diskreten Schrittweite ist, die der im Zusammenhang mit dem Fahrzeug erläuterten Schrittweite entsprechen kann. Die Schrittweite kann insbesondere gleich einer Fahrspurbreite der Fahrspurmarkierung sein, d.h. die vorbestimmte diskrete Schrittweite kann zumindest im Wesentlichen gleich der Breite der Fahrspurmarkierung sein. Der Sensor kann hierdurch eine geringe Komplexität aufweisen, wobei die Verarbeitung der Sensorsignale aus programmiertechnischer Sicht besonders einfach ist. Im Zusammenspiel mit der Markierungsanordnung wird die Steuerungspräzision des Fahrzeugs hierdurch jedoch nicht gemindert.

Ferner ist es bevorzugt, dass die erste Kodiermarkierung und/oder die zweite Kodiermarkierung keine Unterbrechung aufweisen, d.h. eine jeweilige Kodiermarkierung ist als eine in sich zusammenhänge Einheit ausgebildet, die nicht etwa aus mehreren Kodierelementen (z.B. Strichlinien oder Barcode-Balken) zusammengesetzt ist. Beispielsweise kann eine Kodiermarkierung als durchgehender Flächenabschnitt ausgebildet sein, der relativ zur Länge der Fahrspurmarkierung eine vernachlässigbare Größe aufweist und somit als Ganzes unmittelbar von dem Sensor erfasst werden kann, wenn das Fahrzeug eine bestimmte Position relativ zu der Kodiermarkierung angenommen hat, d.h. das Fahrzeug muss keine oder zumindest keine signifikante Wegstrecke zurücklegen, um die Kodiermarkierung bzw. die Kodiermarkierungen zu erfassen.

Ein Außenmaß (z.B. Länge, Breite oder Durchmesser) der ersten Kodiermarkierung und/oder ein Außenmaß der zweiten Kodiermarkierung sind vorzugsweise im Wesentlichen gleich der Breite der Fahrspurmarkierung. Hierdurch kann vorteilhaft ein einziger Sensor zur Erfassung aller relevanten Markierungen vorgesehen werden, der z.B. an die Breite der Fahrspurmarkierung angepasst sein kann. Ferner wird eine zuverlässige Erfassung der Kodiermarkierungen begünstigt. Darüber hinaus kann das Außenmaß, insbesondere sämtliche Außenmaße, der ersten und/oder zweiten Kodiermarkierung auf die Breite der Fahrspurmarkierung begrenzt werden, sodass die Kodiermarkierungen insgesamt als klein bezeichnet werden können. Somit kann eine jeweilige Kodiermarkierung sehr schnell erfasst werden, ohne dass das Fahrzeug überhaupt oder einen signifikanten Wegabschnitt zurücklegen muss, um die Kodiermarkierung als Ganzes zu erfassen.

Die erste Kodiermarkierung und die zweite Kodiermarkierung sind vorzugsweise gleichartig ausgebildet, insbesondere identisch. Ferner ist eine jeweilige Kodiermarkierung singulär bzw. vereinzelt und nicht fortlaufend ausgebildet. Beispielsweise kann die Kodiermarkierung streifenförmig bzw. rechteckförmig ausgebildet sein.

Die Erfindung bezieht sich ferner auf ein System mit wenigstens einem autonomen Fahrzeug nach einer der vorstehend beschriebenen Ausführungsformen und wenigstens einer Markierungsanordnung nach einer der vorstehend beschriebenen Ausführungsformen.

Die Erfindung wird nachfolgend rein beispielhaft anhand der schematischen Figuren erläutert, in denen:
- Fig. 1: ein autonomes Fahrzeug aus dem Stand der Technik mit einer Markierungsanordnung aus dem Stand der Technik zeigt;
- Fig. 2: ein autonomes Fahrzeug gemäß der Erfindung mit einer Markierungsanordnung gemäß der Erfindung zeigt.

Im Folgenden und in den Figuren sind ähnliche Teile mit denselben Bezugszeichen gekennzeichnet.

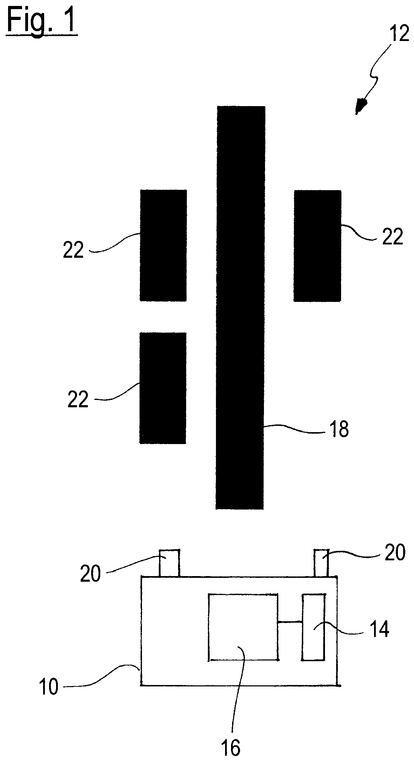

Fig. 1 zeigt schematisch ein autonomes Fahrzeug 10 mit einer Markierungsanordnung 12 aus dem Stand der Technik. Das Fahrzeug 10 weist eine Steuereinrichtung 14 sowie einen Sensor 16 zur Erfassung einer fortlaufenden Fahrspurmarkierung 18 der Markierungsanordnung 12 auf. Die Steuereinrichtung 14 ist dazu angepasst, das Fahrzeug 10 in Abhängigkeit von der erfassten Fahrspurmarkierung 14 entlang der Fahrspurmarkierung 18 zu steuern. Das Fahrzeug 10 weist weitere Sensoren 20 zur Erfassung von benachbart zu der Fahrspurmarkierung 18 angeordneten Markierungen 22 auf, die gemeinsam oder separat einen Steuerbefehl für das Fahrzeug 10 repräsentieren. Um diesen Steuerbefehl auf der Grundlage der Markierungen 22 zu erfassen, muss das Fahrzeug 10 die durch die Markierungen 22 vorgegebene Länge entlang der Fahrspurmarkierung 18 zurücklegen. Hierbei werden die einzelnen Markierungen 22 als solche erfasst und von der Steuereinrichtung 14 ausgewertet. Je komplexer die Information, die dem Fahrzeug 10 durch die Markierungen 22 mitgeteilt werden soll, desto mehr Markierungen 22 müssen entlang der Fahrspurmarkierung 14 vorgesehen werden. Hierdurch verlängert sich die Wegstrecke, die das Fahrzeug 10 zur Erfassung der entsprechenden Informationen zurücklegen muss.

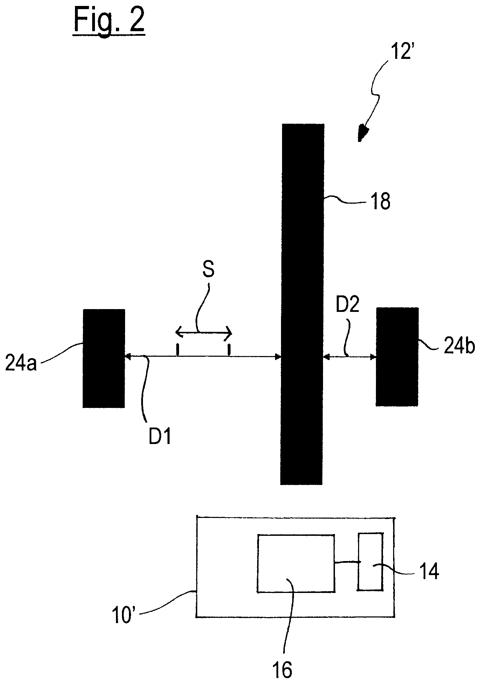

In Fig. 2 ist schematisch ein autonomes Fahrzeug 10' mit einer Markierungsanordnung 12' gemäß der Erfindung gezeigt. Abweichend zu dem Fahrzeug 10 von Fig. 1 weist das Fahrzeug 10' dieser Ausgestaltung keine zusätzlichen Sensoren 20 auf. Vielmehr ist der Sensor 16 dazu angepasst, eine benachbart zu der Fahrspurmarkierung 18 angeordnete erste Kodiermarkierung 24a zu erfassen sowie einen ersten Abstand D1 zwischen der erfassten ersten Kodiermarkierung 24a und der Fahrspurmarkierung 18 zu ermitteln, wobei der Sensor 16 ferner dazu angepasst ist, eine benachbart zu der Fahrspurmarkierung 18 angeordnete zweite Kodiermarkierung 24b zu erfassen, die der ersten Kodiermarkierung 24a quer zur Fahrspurmarkierung 18 gegenüberliegt, und einen zweiten Abstand D2 zwischen der erfassten Kodiermarkierung 24b und der Fahrspurmarkierung 18 zu ermitteln.

Die Steuereinrichtung 14 ist ferner dazu angepasst, das Fahrzeug 10 in Abhängigkeit von dem ermittelten ersten Abstand D1 und dem ermittelten zweiten Abstand D2 zu steuern. Vorzugsweise bilden die Kodiermarkierungen 24a und 24b ein gemeinsames Kodiermarkierungspaar, das einen eindeutigen Steuerbefehl für das Fahrzeug 10' repräsentiert. Die gegenüberliegende Anordnung der Kodiermarkierungen 24a und 24b quer zur Erstreckungsrichtung der Fahrspurmarkierung 18 ermöglicht ein im wesentlichen zeitgleiches Erfassen der Kodiermarkierungen 24a und 24b, ohne dass das Fahrzeug 10' hierfür eine relevante Wegstrecke entlang der Fahrspurmarkierung 18 zurücklegen muss.

Die Fahrzeuge 10 und 10' sind rein schematisch gezeigt. Das Größenverhältnis zwischen den Fahrzeugen 10 und 10' sowie den Markierungsanordnungen 12 und 12' kann somit ganz anders sein als in den Figuren.

Die Abstände D1 und D2 betragen vorzugsweise jeweils ein Vielfaches einer vorbestimmten diskreten Schrittweite S. In Fig. 2 beträgt der erste Abstand D1 drei Schrittweiten S und der zweite Abstand D2 beträgt eine Schrittweite S. Es ist möglich, entlang der Fahrspurmarkierung 18 weitere Kodiermarkierungspaare 24a, 24b anzuordnen, die jeweils separat von anderen Kodiermarkierungspaaren 24a, 24b erfasst und verarbeitet werden. Zur Erfassung einer jeweiligen Kodiermarkierung 24a, 24b bzw. eines Kodiermarkierungspaares 24a, 24b hat es sich als vorteilhaft erwiesen, die Breite der Kodiermarkierungen 24a, 24b gleich der Breite der Fahrspurmarkierung 18 (Außenmaß quer zur Erstreckungsrichtung der Fahrspurmarkierung 18) zu wählen, wie dies in Fig. 2 gezeigt ist. Hieran angepasst kann auch die Schrittweite S gleich der Breite der Fahrspurmarkierung 18 und/oder gleich der Breite der jeweiligen Kodiermarkierungen 24a, 24b sein. Die Länge der Kodiermarkierungen 24a, 24b beträgt in Fig. 2 jeweils zwei Schrittweiten S. Dies muss aber nicht so sein. So können die Kodiermarkierungen 24a, 24b z.B. auch quadratisch mit der Schrittweite S als Kantenlänge ausgebildet sein. Im Hinblick auf eine möglichst rasche Erfassbarkeit der Kodiermarkierungen 24a, 24b haben sich relativ kleine Kodiermarkierungen 24a, 24b als günstig erwiesen, die jedoch noch zuverlässig erfasst werden können. Vorzugsweise weisen die Kodiermarkierungen 24a, 24b keine Unterbrechungen auf. So kann eine jeweilige Kodiermarkierung 24a, 24b etwa als ein zusammenhängender Flächenabschnitt ausgebildet sein, wie dies in Fig. 2 angedeutet ist. Somit sind auch relativ kleine Kodiermarkierungen 24a, 24b mit moderater Sensorauflösung zuverlässig erfassbar.

Zur Kodierung eines jeweiligen Steuerungsbefehls für das Fahrzeug 10' ist vorzugsweise genau ein Kodiermarkierungspaar 24a, 24b vorgesehen, das aus vorzugsweise nicht mehr als zwei gegenüberliegenden Kodiermarkierungen 24a und 24b besteht. Die Steuereinrichtung 14 ist hierfür vorzugsweise dazu angepasst, aus dem ersten Abstand D1 und dem zweiten Abstand D2 einen Wert zu ermitteln, der einen insbesondere eindeutigen Steuerungsbefehl für das Fahrzeug 10 repräsentiert. Beispielhaft kann das folgende Kodierschema K1 verwendet werden:

| D1 [S] | D2 [S] | Wert |
|---|---|---|
| 0 | 0 | 0 |
| 1 | 0 | 1 |
| 2 | 0 | 2 |
| 2 | 1 | 3 |
| 3 | 0 | 3 |
| 3 | 1 | 4 |
| 3 | 2 | 5 |
| | | |
| 0 | 1 | -1 |
| 0 | 2 | -2 |
| 1 | 2 | -3 |
| 0 | 3 | -3 |
| 1 | 3 | -4 |
| 2 | 3 | -5 |

Es versteht sich, dass die Abstände D1, D2 auch mehr als drei Schrittweiten S betragen und entsprechend kodiert sein können. Dies muss aber nicht so sein. Im obigen Beispiel ist der Wert jeweils die Summe der beiden Abstände. Ein negativer Wert wird dann erfasst, wenn das Fahrzeug 10' in umgekehrter Richtung fährt und der Sensor 16 die Kodiermarkierungen 24a, 24b "vertauscht sieht". Das obige Kodierschema besitzt die Eigenschaft, dass unterschiedliche Abstandskombinationen in demselben Wert resultieren können. So resultieren z.B. die Paare (D1, D2) = (2, 1) und (D1, D2) = (3, 0) jeweils in einem Wert 3, was jedoch nicht in jedem Fall einen Nachteil bedeuten muss. So besitzt das Kodierschema den Vorteil, dass das zugrundeliegende Konzept intuitiv verständlich ist und Steuerungsbefehle leicht durch entsprechende Kodiermarkierungen kodiert werden können, insbesondere von innerhalb von kurzer Zeit geschultem Personal.

Ein anderes Kodierschema K2 kann zum Beispiel wie folgt definiert sein:

| D1 [S] | D2 [S] | Wert |
|---|---|---|
| 0 | 0 | 0 |
| 1 | 0 | 1 |
| 2 | 0 | 2 |
| 2 | 1 | 3 |
| 3 | 0 | 4 |
| 3 | 1 | 5 |
| 3 | 2 | 6 |
| 4 | 0 | 7 |
| 4 | 1 | 8 |
| 4 | 2 | 9 |
| 4 | 3 | 10 |
| | | |
| 0 | 1 | -1 |
| 0 | 2 | -2 |
| 1 | 2 | -3 |
| 0 | 3 | -4 |
| 1 | 3 | -5 |
| 2 | 3 | -6 |
| 0 | 4 | -7 |
| 1 | 4 | -8 |
| 2 | 4 | -9 |
| 3 | 4 | -10 |

Es versteht sich, dass die Abstände auch im Fall des oben gezeigten Kodierschemas mehr als vier Schrittweiten S betragen und in entsprechender Weise kodiert sein können. Analog zu dem Kodierschema K1 kann der Abstand D1 in Vorwärtsrichtung, in der bis auf den Fall Null stets positive Werte resultieren, stets größer sein als der zweite Abstand D2. Hierdurch kann das Fahrzeug 10 eine definierte Fahrtrichtung, z.B. "die" Vorwärtsrichtung, detektieren. Im umgekehrten Fall (Fahrzeug 10 fährt entgegengesetzt zur definierten Fahrtrichtung) sieht der Sensor 16 die Kodiermarkierungen 24a, 24b wiederum vertauscht, sodass auch die gemessenen Abstände D1 und D2 vertauscht sind. Das Kodierschema K2 besitzt den Vorteil, dass ein jeweiliges Abstandspaar (D1, D2) ausschließlich einem bestimmten Wert entspricht, der auf diese Weise einen eindeutigen Steuerungsbefehl repräsentiert. Hierbei kann eine eindeutige Zuordnung zwischen einem Abstandspaar (D1, D2) und einem Steuerungsbefehl gewährleistet werden. Ferner wird das "Sichtfeld" des Sensors 16 optimal ausgenutzt, wobei die Kodiermarkierungen 24a, 24b nicht weiter entfernt als nötig angeordnet werden.

Die Kodiermarkierungen 24a, 24b können z.B. mittels einer auf die gewünschte Schrittweite S gerasterte Schablone (nicht gezeigt) einfach in einem gewünschten Abstand D1 bzw. D2 von der Fahrspurmarkierung angeordnet bzw. angebracht werden.

Es versteht sich, dass umso mehr Werte kodiert werden können je kleiner die Schrittweite S ist, die von dem Sensor 16 aufgelöst wird. Ferner kann die Anzahl kodierbarer Werte auch durch die Erhöhung des maximal von dem Sensor S messbaren Abstands D1, D2 erhöht werden. Dies kann durch einen "weitwinkelfähigen" Sensor 16 erfolgen, der auch weiter von der Fahrspurmarkierung 18 entfernte Kodiermarkierungen 24a, 24b erfassen kann. Ferner versteht es sich, dass auch andere als die hier aufgeführten Kodiervorschriften verwendet werden können. Insbesondere kann eines von mehreren vordefinierten Kodierschemata durch einen Benutzer oder automatisch ausgewählt werden, sodass das Fahrzeug 10' mit unterschiedlichen Markierungsanordnungen 12' kompatibel ist. Hierzu können mehrere Kodierschemata K1, K2 in dem Fahrzeug 10' gespeichert sein.

Entsprechende Kodierschemata können in analoger Weise auch für den Fall angewendet oder angepasst werden, in dem lediglich ein einzelner Abstandswert einem bestimmten Steuerungsbefehl zugeordnet werden soll, und insbesondere, wenn nur auf einer Seite Kodiermarkierungen vorgesehen sind, deren Abstand ausgewertet wird. Das Fahrzeug kann hierdurch eine besonders geringe Komplexität aufweisen, was insbesondere solchen Anwendungsfällen von Vorteil ist, in denen eine besonders robuste und/oder preisgünstige Technologie gefragt ist.

### Bezugzeichenliste

- 10, 10': Fahrzeug
- 12, 12': Markierungsanordnung
- 14: Steuereinrichtung
- 16: Sensor
- 18: Fahrspurmarkierung
- 20: Sensor
- 22: Markierung
- 24a: erste Kodiermarkierung
- 24b: zweite Kodiermarkierung

- D1: erster Abstand
- D2: zweiter Abstand
- S: Schrittweite

## Patentansprüche

1. Autonomes Fahrzeug, insbesondere fahrerloses Transportfahrzeug,
mit einer Steuereinrichtung (14) und einem Sensor (16) zur Erfassung einer fortlaufenden Fahrspurmarkierung (18),
wobei die Steuereinrichtung (14) dazu angepasst ist, das Fahrzeug (10') in Abhängigkeit von der erfassten Fahrspurmarkierung (18) entlang der Fahrspurmarkierung (18) zu steuern,
wobei der Sensor (16) dazu angepasst ist, eine benachbart zu der Fahrspurmarkierung (18) angeordnete erste Kodiermarkierung (24a) zu erfassen,
**dadurch gekennzeichnet, dass**
der Sensor (16) ferner dazu angepasst ist, einen ersten Abstand (D1) zwischen der erfassten ersten Kodiermarkierung (24a) und der Fahrspurmarkierung (18) zu ermitteln,
und wobei die Steuereinrichtung (14) ferner dazu angepasst ist, das Fahrzeug (10') in Abhängigkeit von dem ermittelten ersten Abstand (D1) zu steuern.

2. Autonomes Fahrzeug (10') nach Anspruch 1,
wobei der Sensor (16) ferner dazu angepasst ist,
eine benachbart zu der Fahrspurmarkierung (18) angeordnete zweite Kodiermarkierung (24b) zu erfassen, die der ersten Kodiermarkierung (24a) quer zur Fahrspurmarkierung (18) gegenüberliegt;
einen zweiten Abstand (D2) zwischen der erfassten zweiten Kodiermarkierung (24b) und der Fahrspurmarkierung (18) zu ermitteln, und wobei die Steuereinrichtung (14) ferner dazu angepasst ist, das Fahrzeug (10') in Abhängigkeit von dem ermittelten ersten Abstand (D1) und dem ermittelten zweiten Abstand (D2) zu steuern.

3. Autonomes Fahrzeug (10') nach Anspruch 2,
**dadurch gekennzeichnet, dass**
die Steuereinrichtung (14) ferner dazu angepasst ist, aus dem ersten Abstand (D1) und/oder dem zweiten Abstand (D2) einen Wert zu ermitteln, der einen eindeutigen Steuerungsbefehl für das Fahrzeug (10') repräsentiert.

4. Autonomes Fahrzeug (10') nach Anspruch 2 oder 3,
**dadurch gekennzeichnet, dass**
der Sensor (16) ferner dazu angepasst ist, den ersten Abstand (D1) und/oder den zweiten Abstand (D2) als Vielfaches einer vorbestimmten diskreten Schrittweite (S) zu ermitteln.

5. Autonomes Fahrzeug (10') nach zumindest einem der Ansprüche 2 bis 4,
**dadurch gekennzeichnet, dass**
die Steuereinrichtung (14) ferner dazu angepasst ist,
festzustellen, ob der erste Abstand (D1) und/oder der zweite Abstand (D2) zumindest im Wesentlichen gleich einem ganzzahligen Vielfachen einer vorbestimmten diskreten Schrittweite (S) ist,
ein Fehlersignal zu erzeugen, wenn der erste Abstand (D1) und/oder der zweite Abstand (D2) nicht zumindest im Wesentlichen gleich einem Vielfachen der vorbestimmten diskreten Schrittweite (S) ist.

6. Autonomes Fahrzeug (10') nach zumindest einem der Ansprüche 2 bis 5,
**dadurch gekennzeichnet, dass**
die Steuereinrichtung (14) ferner dazu angepasst ist, aus dem ersten Abstand (D1) und/oder dem zweiten Abstand (D2) eine Fahrtrichtung des Fahrzeugs (10') zu ermitteln.

7. Autonomes Fahrzeug (10') nach zumindest einem der Ansprüche 2 bis 6,
**dadurch gekennzeichnet, dass**
der Sensor (16) ferner dazu angepasst ist,
die erste Kodiermarkierung (24a) und die zweite Kodiermarkierung (24b) paarweise zu erfassen, und
ein Fehlersignal zu erzeugen, wenn die erste Kodiermarkierung (24a) und die zweite Kodiermarkierung (24b) nicht paarweise erfasst werden.

8. Autonomes Fahrzeug (10') nach zumindest einem der Ansprüche 2 bis 7,
**dadurch gekennzeichnet, dass**
die Steuereinrichtung (14) ferner dazu angepasst ist,
festzustellen, ob der erste Abstand (D1) und/oder zweite Abstand (D2) wenigstens einen Abstandsgrenzwert verletzt, und
ein dem wenigstens einen Abstandsgrenzwert zugeordnetes Fehlersignal zu erzeugen, wenn der wenigstens eine Abstandsgrenzwert verletzt wird.

9. Autonomes Fahrzeug (10') nach zumindest einem der Ansprüche 2 bis 8,
**dadurch gekennzeichnet, dass**
die Steuereinrichtung (14) ferner dazu angepasst ist,
festzustellen, ob eine absolute Differenz des ersten Abstands (D1) und des zweiten Abstands (D2) und/oder ein Verhältnis zwischen dem ersten Abstand (D1) und dem zweiten Abstand (D2) einen Validierungsgrenzwert verletzt, und
ein Fehlersignal zu erzeugen, wenn der Validierungsgrenzwert verletzt wird.

10. Autonomes Fahrzeug (10') nach zumindest einem der vorhergehenden Ansprüche,
**dadurch gekennzeichnet, dass**
das Fahrzeug (10') lediglich einen einzigen Sensor (16) zur Erfassung der Fahrspurmarkierung (18), der ersten Kodiermarkierung (24a) und der zweiten Kodiermarkierung (24b) aufweist.

11. Autonomes Fahrzeug (10') nach zumindest einem der vorhergehenden Ansprüche,
**dadurch gekennzeichnet, dass**
der Sensor (16) dazu angepasst ist, zur Erfassung der Fahrspurmarkierung (18) wenigstens einen Abstand zwischen der Fahrspurmarkierung (18) und dem Fahrzeug (10') zu ermitteln, insbesondere wobei der Sensor (16) als Abstandssensor ausgebildet ist.

12. Autonomes Fahrzeug (10') nach zumindest einem der vorhergehenden Ansprüche,
**dadurch gekennzeichnet, dass**
der Sensor (16) einen optoelektronischen Sensor und/oder einen elektromagnetischen Sensor, insbesondere einen induktiven Sensor, einen Magnetfeldsensor oder einen kapazitiven Sensor umfasst.

13. Markierungsanordnung (12') für ein autonomes Fahrzeug (10'), insbesondere einem fahrerlosen Transportfahrzeug, gemäß zumindest einem der vorhergehenden Ansprüche, umfassend
eine fortlaufende Fahrspurmarkierung (18),
wenigstens eine benachbart zu der Fahrspurmarkierung (18) und in einem ersten Abstand (D1) zu der Fahrspurmarkierung (18) angeordnete erste Kodiermarkierung (24a),
wenigstens eine benachbart zu der Fahrspurmarkierung (18) und in einem zweiten Abstand (D2) zu der Fahrspurmarkierung (18) angeordnete zweite Kodiermarkierung (24b), die der ersten Kodiermarkierung (24a) quer zur Fahrspurmarkierung (18) gegenüberliegt,
wobei die erste Kodiermarkierung (24a) und die zweite Kodiermarkierung (24b) ein Kodiermarkierungspaar bilden, das aufgrund des ersten Abstands (D1) und des zweiten Abstands (D2) einen eindeutigen Steuerungsbefehl für das Fahrzeug (10') repräsentiert.

14. Markierungsanordnung (12') nach Anspruch 13,
**dadurch gekennzeichnet,**
**dass** der erste Abstand (D1) größer als der zweite Abstand (D2) ist und/oder
**dass** der erste Abstand (D1) und der zweite Abstand (D2) gleich einem Vielfachen einer vorbestimmten diskreten Schrittweite (S) ist.

15. Markierungsanordnung (12') nach Anspruch 13 oder 14,
**dadurch gekennzeichnet,**
**dass** die erste Kodiermarkierung (24a) und/oder die zweite Kodiermarkierung (24b) keine Unterbrechung aufweist
und/oder
**dass** ein Außenmaß der ersten Kodiermarkierung (24a) und/oder ein Außenmaß der zweiten Kodiermarkierung (24b) im Wesentlichen gleich der Breite der Fahrspurmarkierung (18) ist.

## Claims

1. An autonomous vehicle, in particular a driverless transport vehicle, comprising a control device (14) and a sensor (16) for detecting a continuous lane marking (18),
wherein the control device (14) is adapted to control the vehicle (10') along the lane marking (18) in dependence on the detected lane marking (18); and
wherein the sensor (16) is adapted to detect a first code marking (24a) arranged adjacent to the lane marking (18),
**characterized in that**
the sensor (16) is further adapted to determine a first distance (D1) between the detected first code marking (24a) and the lane marking (18),
and with the control device (14) further being adapted to control the vehicle (10') in dependence on the determined first distance (D1).

2. An autonomous vehicle (10') in accordance with claim 1,
wherein the sensor (16) is further adapted
to detect a second code marking (24b) that is arranged adjacent to the lane marking (18) and that is disposed opposite the first code marking (24a) transversely to the lane marking (18);
to determine a second distance (D2) between the detected second code marking (24b) and the lane marking (18);
and wherein the control device (14) is furthermore adapted to control the vehicle (10') in dependence on the determined first distance (D1) and on the determined second distance (D2).

3. An autonomous vehicle (10') in accordance with claim 2,
**characterized in that**
the control device (14) is further adapted to determine a value from the first distance (D1) and/or from the second distance (D2) that represents an unambiguous control command for the vehicle (10').

4. An autonomous vehicle (10') in accordance with claim 2 or claim 3,
**characterized in that**
the sensor (16) is further adapted to determine the first distance (D1) and/or the second distance (D2) as a multiple of a predefined discrete increment (S).

5. An autonomous vehicle (10') in accordance with at least one of the claims 2 to 4,
**characterized in that**
the control device (14) is further adapted
to determine whether the first distance (D1) and/or the second distance (D2) is/are at least substantially equal to a whole number multiple of a predefined discrete increment (S); and
to generate an error signal when the first distance (D1) and/or the second distance (D2) is/are not at least substantially equal to a multiple of the predefined discrete increment (S).

6. An autonomous vehicle (10') in accordance with at least one of the claims 2 to 5,
**characterized in that**
the control device (14) is further adapted to determine a direction of travel of the vehicle (10') from the first distance and/or from the second distance (D2).

7. An autonomous vehicle (10') in accordance with at least one of the claims 2 to 6,
**characterized in that**
the sensor (16) is further adapted
to detect the first code marking (24a) and the second code marking (24b) pairwise; and
to generate an error signal when the first code marking (24a) and the second code marking (24b) are not detected pairwise.

8. An autonomous vehicle (10') in accordance with at least one of the claims 2 to 7,
**characterized in that**
the control device (14) is further adapted
to determine whether the first distance (D1) and/or the second distance (D2) infringes/infringe at least one distance limit value; and
to generate an error signal associated with the at least one distance limit value when the at least one distance limit value is infringed.

9. An autonomous vehicle (10') in accordance with at least one of the claims 2 to 8,
**characterized in that**
the control device (14) is further adapted
to determine whether an absolute difference of the first distance (D1) and of the second distance (D2) and/or a ratio between the first distance (D1) and the second distance (D2) infringes/infringe a validation limit value; and
to generate an error signal when the validation limit value is infringed.

10. An autonomous vehicle (10') in accordance with at least one of the preceding claims,
**characterized in that**
the vehicle (10') has only one single sensor (16) for detecting the lane marking (18), the first code marking (24a), and the second code marking (24b).

11. An autonomous vehicle (10') in accordance with at least one of the preceding claims,
**characterized in that**
the sensor (16) is adapted to determine at least one distance between the lane marking (18) and the vehicle (10') for detecting the lane marking (18), in particular with the sensor (16) being configured as a distance sensor.

12. An autonomous vehicle (10') in accordance with at least one of the preceding claims,
**characterized in that**
the sensor (16) comprises an optoelectronic sensor and/or an electromagnetic sensor, in particular an inductive sensor, a magnetic field sensor or a capacitive sensor.

13. A marking arrangement (12') for an autonomous vehicle (10'), in particular a driverless transport vehicle, in accordance with at least one of the preceding claims, comprising
a continuous lane marking (18),
at least one first code marking (24a) arranged adjacent to the lane marking (18) and at a first distance (D1) from the lane marking (18); and
at least one second code marking (24b) that is arranged adjacent to the lane marking (18) and at a second distance (D2) from the lane marking (18) and that is disposed opposite the first code marking (24a) transversely to the lane marking (18),
wherein the first code marking (24a) and the second code marking (24b) form a code marking pair that represents an unambiguous control command for the vehicle (10') on the basis of the first distance (D1) and the second distance (D2).

14. A marking arrangement (12') in accordance with claim 13,
**characterized in that**
the first distance (D1) is greater than the second distance (D2); and/or
**in that** the first distance (D1) and the second distance (D2) are equal to a multiple of a predefined discrete increment (S).

15. A marking arrangement (12') in accordance with claim 13 or claim 14,
**characterized in that**
the first code marking (24a) and/or the second code marking (24b) does/do not have any interruption;
and/or
**in that** an outer dimension of the first code marking (24a) and/or an outer dimension of the second code marking (24b) is/are substantially equal to the width of the lane marking (18).

## Revendications

1. Véhicule autonome, en particulier véhicule de transport sans conducteur, comportant un moyen de commande (14) et un capteur (16) pour détecter un marquage de voie de circulation (18) continu,
dans lequel le moyen de commande (14) est adapté pour commander le véhicule (10') le long du marquage de voie (18) en fonction du marquage de voie détecté (18),
le capteur (16) est adapté pour détecter un premier marquage de codage (24a) disposé au voisinage du marquage de voie (18),
**caractérisé en ce que**
le capteur (16) est en outre adapté pour déterminer une première distance (D1) entre le premier marquage de codage détecté (24a) et le marquage de voie (18), et
le moyen de commande (14) est en outre adapté pour commander le véhicule (10') en fonction de la première distance déterminée (D1).

2. Véhicule autonome (10') selon la revendication 1,
dans lequel
le capteur (16) est en outre adapté pour
détecter un second marquage de codage (24b) disposé au voisinage du marquage de voie (18) et opposé au premier marquage de codage (24a) transversalement au marquage de voie (18);
déterminer une seconde distance (D2) entre le second marquage de codage détecté (24b) et la marquage de voie (18),
et le moyen de commande (14) est en outre adapté pour commander le véhicule (10') en fonction de la première distance déterminée (D1) et de la seconde distance déterminée (D2).

3. Véhicule autonome (10') selon la revendication 2,
**caractérisé en ce que**
le moyen de commande (14) est en outre adapté pour déterminer une valeur à partir de la première distance (D1) et/ou de la seconde distance (D2), valeur qui représente un ordre de commande univoque pour le véhicule (10).

4. Véhicule autonome (10') selon la revendication 2 ou 3,
**caractérisé en ce que**
le capteur (16) est en outre adapté pour déterminer la première distance (D1) et/ou la seconde distance (D2) comme un multiple d'une largeur de pas discrète prédéterminée (S).

5. Véhicule autonome (10') selon l'une au moins des revendications 2 à 4,
**caractérisé en ce que**
le moyen de commande (14) est en outre adapté pour constater si la première distance (D1) et/ou la seconde distance (D2) est au moins sensiblement égale à un multiple entier d'une largeur de pas discrète prédéterminée (S),
générer un signal d'erreur si la première distance (D1) et/ou la seconde distance (D2) n'est pas au moins sensiblement égale à un multiple de la largeur de pas discrète prédéterminée (S).

6. Véhicule autonome (10') selon l'une au moins des revendications 2 à 5,
**caractérisé en ce que**
le moyen de commande (14) est en outre adapté pour déterminer une direction de circulation du véhicule (10') à partir de la première distance (D1) et/ou de la seconde distance (D2).

7. Véhicule autonome (10') selon l'une au moins des revendications 2 à 6,
**caractérisé en ce que**
le capteur (16) est en outre adapté pour
détecter par paire le premier marquage de codage (24a) et le second marquage de codage (24b), et
générer un signal d'erreur si le premier marquage de codage (24a) et le second marquage de codage (24b) ne sont pas détectés par paire.

8. Véhicule autonome (10') selon l'une au moins des revendications 2 à 7,
**caractérisé en ce que**
le moyen de commande (14) est en outre adapté pour constater si la première distance (D1) et/ou la seconde distance (D2) viole au moins une valeur limite de distance, et
générer un signal d'erreur associé à ladite au moins une valeur limite de distance si ladite au moins une valeur limite de distance est violée.

9. Véhicule autonome (10') selon l'une au moins des revendications 2 à 8,
**caractérisé en ce que**
le moyen de commande (14) est en outre adapté pour constater si une différence absolue de la première distance (D1) et de la seconde distance (D2) et/ou un rapport entre la première distance (D1) et la seconde distance (D2) viole une valeur limite de validation, et
générer un signal d'erreur si la valeur limite de validation est violée.

10. Véhicule autonome (10') selon l'une au moins des revendications précédentes,
**caractérisé en ce que**
le véhicule (10') ne comprend qu'un unique capteur (16) pour détecter le marquage de voie (18), le premier marquage de codage (24a) et le second marquage de codage (24b).

11. Véhicule autonome (10') selon l'une au moins des revendications précédentes,
**caractérisé en ce que**
le capteur (16) est adapté pour déterminer au moins une distance entre le marquage de voie (18) et le véhicule (10'), en vue de détecter le marquage de voie (18), le capteur (16) étant réalisé en particulier sous forme de capteur de distance.

12. Véhicule autonome (10') selon l'une au moins des revendications précédentes,
**caractérisé en ce que**
le capteur (16) comprend un capteur optoélectronique et/ou un capteur électromagnétique, en particulier un capteur inductif, un capteur de champ magnétique ou un capteur capacitif.

13. Ensemble de marquage (12') pour un véhicule autonome (10'), en particulier pour un véhicule de transport sans conducteur selon l'une au moins des revendications précédentes, comportant
un marquage de voie de circulation (18) continu,
au moins un premier marquage de codage (24a) disposé au voisinage du marquage de voie (18) et à une première distance (D1) du marquage de voie (18),
au moins un second marquage de codage (24b) disposé au voisinage du marquage de voie (18) et à une seconde distance (D2) du marquage de voie (18), qui est opposé au premier marquage de codage (24a) transversalement au marquage de voie (18),
dans lequel
le premier marquage de codage (24a) et le second marquage de codage (24b) forment une paire de marquages de codage qui, en se basant sur la première distance (D1) et sur la seconde distance (D2), représente un ordre de commande univoque pour le véhicule (10').

14. Ensemble de marquage (12') selon la revendication 13,
**caractérisé en ce que**
la première distance (D1) est supérieure à la seconde distance (D2), et/ou la première distance (D1) et la seconde distance (D2) sont égales à un multiple d'une largeur de pas discrète prédéterminée (S).

15. Ensemble de marquage (12') selon la revendication 13 ou 14,
**caractérisé en ce que**
le premier marquage de codage (24a) et/ou le second marquage de codage (24b) ne présente(nt) aucune interruption,
et/ou
une dimension extérieure du premier marquage de codage (24a) et/ou une dimension extérieure du second marquage de codage (24b) est sensiblement égale à la largeur du marquage de voie (18).
